Europäisches Patentamt

European Patent Office

Office européen des brevets

(11) Veröffentlichungsnummer: **0 520 343 A1**

# EUROPÄISCHE PATENTANMELDUNG

(21) Anmeldenummer: **92110435.2**

(22) Anmeldetag: **20.06.92**

(51) Int. Cl.⁵: **B62D 25/12**

(30) Priorität: **26.06.91 US 721059**

(43) Veröffentlichungstag der Anmeldung:
**30.12.92 Patentblatt 92/53**

(84) Benannte Vertragsstaaten:
**DE FR GB IT**

(71) Anmelder: **DEERE & COMPANY**
**1 John Deere Road**
**Moline, Illinois 61265(US)**

(72) Erfinder: **Bening, Curtis Reinhard**
**W6762 Cty. Hwy.B**
**Burnett, Wisconsin 53922(US)**
Erfinder: **Tessenske, Dean James**
**415 Rich St.**
**Horicon, Wisconsin 53032(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

(54) **Einrichtung zum Öffnen und Schliessen einer Fahrzeughaube.**

(57) Bei einer Vorrichtung zum Anschließen eines zwischen einer Schließstellung und einer Offenstellung verschwenkbaren Verschlußteiles mit wenigstens einer unter der Wirkung eines Federmittels stehenden Gelenkstange (28), die einenends an dem Verschlußteil über eine erste Schwenkachse (80) und anderenends an einem gestellfesten Teil über eine zweite Schwenkachse (74) angelenkt ist, wobei die Wirkungslinie des Federmittels in der Schließstellung des Verschlußteils an einer Seite der zweiten Schwenkachse (74) und in der Offenstellung des Verschlußteils an der anderen Seite der zweiten Schwenkachse (74) verläuft, ist eine einenends gestellfest gelagerte Führungsstange (48) vorgesehen, die anderenends mit der Gelenkstange (28) verschiebbar verbunden ist und das als Druckfeder (58) ausgebildete Federmittel aufnimmt.

FIG. 2

Die Erfindung bezieht sich auf eine Vorrichtung zum Anschließen eines zwischen einer Schließstellung und einer Offenstellung verschwenkbaren Verschlußteiles mit wenigstens einer unter der Wirkung eines Federmittels stehenden Gelenkstange, die einenends an dem Verschlußteil über eine erste Schwenkachse und anderenends an einem gestellfesten Teil über eine zweite Schwenkachse angelenkt ist, wobei die Wirkungslinie des Federmittels in der Schließstellung des Verschlußteils an einer Seite der zweiten Schwenkachse und in der Offenstellung des Verschlußteils an der anderen Seite der zweiten Schwenkachse verläuft.

Diese bekannte Vorrichtung (US-A-3 767 001) dient zum Verschließen eines Fahrzeugraumes und weist zwei mit gegenseitigem Abstand angeordnete und schwanenhalsähnlich ausgebildete Gelenkstangen auf, die mit je einer Zugfeder zusammenwirken. Die Gelenkstangen sind in eine Endstellung verschwenkbar, in der sie gegen einen gehäusefesten Teil unter der Wirkung der beiden Federn anliegen, in der das die erste Schwenkachse aufweisende Ende des Verschlußteils etwas angehoben ist und in der das andere Ende des Verschlußteils noch auf dem Fahrzeugraum aufliegt. Zum vollständigen Öffnen muß dann der als Deckel ausgebildete Verschlußteil von Hand um die erste Schwenkachse in seine Offenstellung verschwenkt werden. Diese Vorrichtung ist aufwendig und benötigt viel Platz, insbesondere dann, wenn der Schwenkbereich der Gelenkstangen vergrößert würde. Dieser Platz ist aber bei vielen Fahrzeugen, insbesondere bei den relativ klein und kompakt gebauten in der Garten- und Landschaftspflege einsetzbaren Kompakttraktoren, nicht vorhanden.

Die mit der Erfindung zu lösende Aufgabe wird darin gesehen, die Vorrichtung zum Anschließen eines verschwenkbaren Verschlußteils vorteilhafter auszubilden. Diese Aufgabe ist durch eine einenends gestellfest gelagerte Führungsstange gelöst, die anderenends mit der Gelenkstange verschiebbar verbunden ist und das als Druckfeder ausgebildete Federmittel aufnimmt. Auf diese Weise kann der Schwenkweg der Gelenkstange größer ausgebildet werden und wird nur durch die Länge der Führungsstange begrenzt, die damit zwei Aufgaben wahrnimmt, und zwar die Führung des als Druckfeder ausgebildeten einzigen Federmittels und die Begrenzung des Schwenkweges, so daß zusätzliche Anschlagmittel für die Gelenkstange nicht erforderlich sind. Die Druckfeder hält dabei den Verschlußteil sicher in seiner Schließstellung und unterstützt das Verschwenken des Verschlußteils in seine Offenstellung. Die Vorrichtung benötigt nur wenige Teile und ist platzsparend anzubringen.

Ebenso, wie bei dem eingangs berücksichtigten Dokument kann der verschlußteil um seine erste Schwenkachse gesondert verschwenkt werden, weshalb nach einem weiteren Vorschlag der Erfindung vorgesehen ist, daß die Gelenkstange in der Offenstellung des Verschlußteils gegen einen an dem Verschlußteil vorgesehenen Anschlag zur Anlage bringbar ist. Hierdurch wird der Schwenkweg des Verschlußteiles in einfacher Art begrenzt.

Für eine Vorrichtung, bei der die erste Schwenkachse oberhalb der zweiten Schwenkachse angeordnet ist, wird ferner vorgeschlagen, daß die Führungsstange um eine dritte gestellfeste Schwenkachse verschwenkbar ist, die in der Schließstellung des Verschlußteils oberhalb der ersten Schwenkachse verläuft. In der Schließstellung kann dadurch die dritte Schwenkachse dicht unterhalb des Verschlußteils liegen, was zu einer kompakten und platzsparenden Bauweise führt, wobei die in einem Fahrzeugraum untergebrachten Teile nicht behindert werden.

Zur platzsparenden Anordnung kann nach der Erfindung ferner vorgesehen werden, daß die dritte Schwenkachse mit horizontalem Abstand zu der zweiten Schwenkachse angeordnet ist und die Führungsstange mit ihrem der dritten Schwenkachse abgelegenen Ende von einer Seite der zweiten Schwenkachse auf die andere Seite der zweiten Schwenkachse vertikal verschwenkbar ist, wobei die Gelenkstange zwei mit gegenseitigem Abstand angeordnete und an der ersten und zweiten Schwenkachse angreifende Schenkel und Wenigstens einen dritten zu dem ersten und zweiten Schenkel parallel verlaufenden Schenkel aufweist, der um die zweite Schwenkachse verschwenkbar ist, eine kürzere Länge als der erste und zweite Schenkel aufweist und an seinem freien Ende die Führungsstange verschiebbar aufnimmt. Die Gelenkstange kann hierbei einstückig ausgebildet werden und beim Verstellen des kurzen Schenkels wird die Druckfeder mit ihrer Wirkungslinie von einer Seite der zweiten Schwenkachse zu deren anderen Seite verstellt.

Die Vorrichtung eignet sich besonders gut für den Einsatz an einem in der Garten- und Grundstückspflege einsetzbaren Kleintraktor, weshalb nach einem weiteren erfindungsgemäßen Vorschlag der Verschlußteil als eine Motorhaube ausgebildet ist, die einen frontseitig an einem Fahrzeug vorgesehenen Motorraum abdeckt, wobei die erste Schwenkachse an einem vorderen Bereich der Motorhaube, die zweite Schwenkachse in einem vorderen Bereich des Fahrzeuges und die dritte Schwenkachse mit Längsabstand rückwärtig der zweiten Schwenkachse vorgesehen ist. Auf diese Weise läßt sich die Motorhaube bis etwa vor das Fahrzeug verschwenken, so daß sie einen sehr großen Öffnungswinkel aufweist.

Im Einzelnen kann nach der Erfindung vorgesehen sein, daß am Fahrzeug ein sich quer erstreckender Haubenträger vorgesehen ist, der zwei etwa mittig angeordnete, zueinander Querabstand aufweisende und nach oben gerichtete Arme aufnimmt, an deren oberen freien Ende die Führungsstange um die dritte Schwenkachse vertikal schwenkbar gelagert ist, auf der ein Drehteil verschiebbar aufsitzt, das seinerseits in den freien Enden von zwei kurzen Schenkeln der Gelenkstange vertikal schwenkbar angeordnet ist, wobei die Feder einenends gegen den Drehteil und anderenends gegen einen Anschlag anliegt, der im Bereich der dritten Schwenkachse vorgesehen ist. Bei der Verstellung der Führungsstange von einer Seite der zweiten Schwenkachse auf die andere kann dann das freie Ende der Führungsstange sich frei in dem Spalt zwischen den beiden kurzen Schenkeln bewegen. Schließlich wird nach der Erfindung noch vorgeschlagen, daß mit Abstand zu der Gelenkstange eine Verriegelungsvorrichtung vorgesehen ist, die mindestens eine am Fahrzeug vorgesehene Platte mit einer Führungsbahn aufweist, die einen mit der Motorhaube verbundenen Stift verschiebbar aufnehmen kann. Diese Maßnahme ermöglicht es, daß das eine Ende der Motorhaube von der Druckfeder in seiner Schließstellung gehalten und das andere Ende der Motorhaube durch die Verriegelungsvorrichtung gesichert ist, die nicht gesondert manuell betätigt werden muß.

In der Zeichnung ist ein nachfolgend näher erläutertes Ausführungsbeispiel der Erfindung dargestellt. Es zeigt:

Fig. 1    ein mit einer verschwenkbaren Motorhaube ausgerüstetes und hauptsächlich in der Garten- und Landschaftspflege einsetzbares Fahrzeug,

Fig. 2    eine Vorrichtung zum gelenkigen Anschließen der Motorhaube,

Fig. 3    die Vorrichtung nach Fig. 2 in einer Stellung, in der sich die Motorhaube in ihrer Schließstellung befindet,

Fig. 4    die Motorhaube in ihrer geschlossenen und verriegelten Stellung und in strichlierten Linien, die Motorhaube in ihrer entriegelten Stellung und

Fig. 5    die Vorrichtung nach Fig. 2 in einer Stellung, in der die Motorhaube vollständig geöffnet ist.

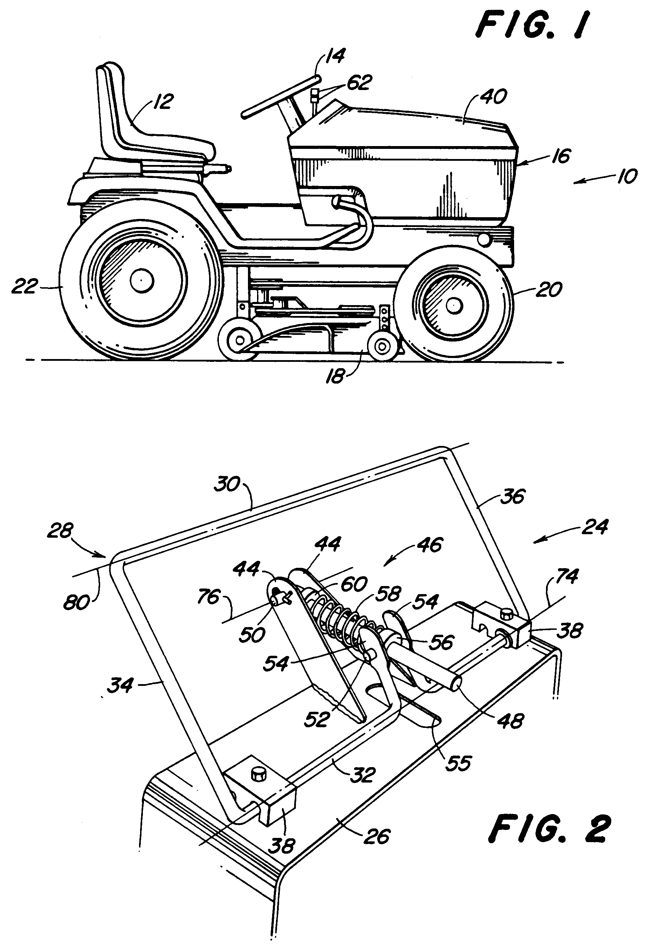

In Fig. 1 der Zeichnung ist ein in der Garten- und Landschaftspflege einsetzbares Fahrzeug 10 dargestellt, das mit einem frontseitig angeordneten Verbrennungsmotor und einem rückwärtig angeordneten Fahrersitz 12 ausgerüstet ist, vor dem sich ein Lenkrad 14 zum Steuern des Fahrzeuges befindet. Der in der Zeichnung nicht erkennbare Verbrennungsmotor ist auf dem Fahrzeugrahmen in einem frontseitigen Motorraum 16 angeordnet. Das Fahrzeug selbst ist relativ klein mit einem kurzen Radstand ausgebildet und mit einem Mähwerk 18 zwischen seinen vorderen und rückwärtigen Laufrädern 20 und 22 versehen.

Der Motorraum 16 ist über eine vertikal verschwenkbare Motorhaube 40 verschließbar, wobei eine Vorrichtung 24 zum gelenkigen Anschließen der Motorhaube 40 in Fig. 2 dargestellt ist. Derartige Vorrichtungen können überall dort Verwendung finden, wo ein Deckel verschwenkbar anzuordnen ist. Die Vorrichtung 24 selbst ist beim bevorzugten Ausführungsbeispiel auf einem Haubenträger 26 montiert, der in herkömmlicher Weise im Motorraum 16 oder an dem Fahrzeugrahmen angebracht werden kann.

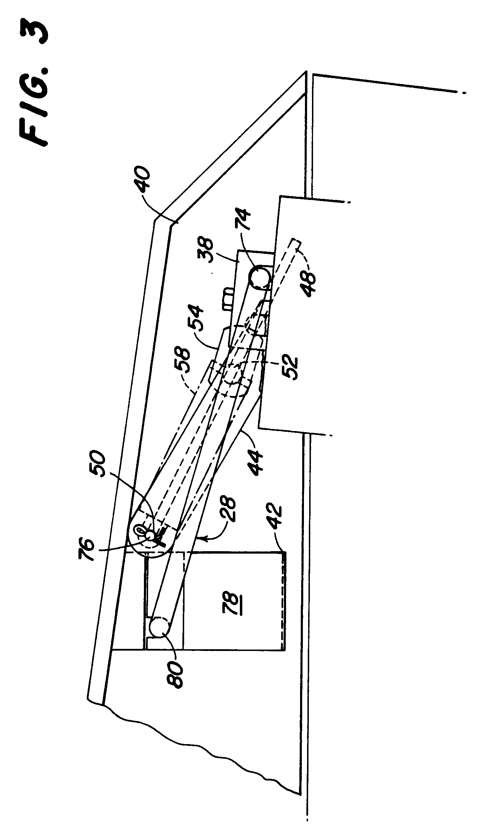

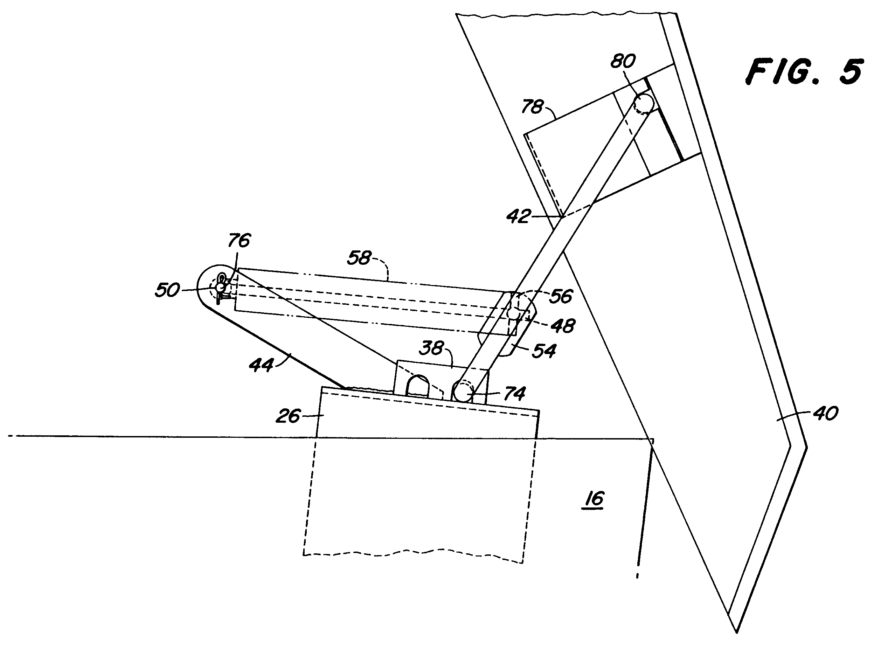

Die Vorrichtung 24 weist eine Gelenkstange 28 auf, die beim Ausführungsbeispiel etwa rechteckig ausgebildet ist und einen oberen Schenkel 30, einen unteren und geteilten Schenkel 32 und je einen oberen und unteren Schenkel miteinander verbindenden seitlichen Schenkel 34 und 36 aufweist. Die Gelenkstange 28 ist vertikal veschwenkbar auf dem Haubenträger 26 angeordnet, wozu zwei mit gegenseitigen Abstand auf dem Haubenträger 26 angeordnete Lagerböcke 38 vorgesehen sind, die die beiden Abschnitte des unteren Schenkels 32 im Bereich der seitlichen Schenkel 34, 36 drehbar aufnehmen. Die Lagerböcke 38 sind für die Aufnahme des unteren Schenkels 32 mit entsprechenden Aussparungen oder Bohrungen versehen und mit dem Haubenträger 26 verschraubbar. Die Gelenkstange 28 ist damit in Fahrzeuglängsrichtung auf einem Kreisbogen zwischen ihren in Fig. 3 und 5 wiedergegebenen Endstellungen verschwenkbar.

Der obere und horizontal verlaufende Schenkel 30 kann ebenfalls geteilt ausgebildet sein, solange er obere horizontal verlaufende Abschnitte aufweist, die einen gelenkigen Anschluß an die Motorhaube 40 über herkömmliche Mittel erlauben. Die Gelenkachse an der Motorhaube ist mit 80 bezeichnet, und die Haube ist ebenfalls um diese Gelenkachse 80 verschwenkbar, wobei ihre maximale Offenstellung, die in Fig. 5 wiedergegeben ist, durch einen Anschlag 42 und eine Übertotpunkteinrichtung 46 begrenzt wird.

Aus den Fig. 2, 3 und 5 ist noch zu ersehen, daß der Haubenträger 26 mit zwei zueinander Querabstand aufweisenden Armen 44 versehen ist, die mit ihrem einen Ende mit dem Haubenträger fest verbunden, beispielsweise verschweißt sind und sich frei nach rückwärts und schräg nach oben erstrecken. Die Arme 44 nehmen die Übertotpunkteinrichtung 46 an ihrem einen Ende auf, die im wesentlichen durch eine Führungsstange 48 geprägt ist. Die Führungsstange 48 ist mit ihrem einen Ende in den oberen und freien Enden der Arme 44 um eine horizontale Schwenkachse 76 drehbar, wozu ein auf der Führungsstange 48 ortsfest angeordneter und mit Gelenkzapfen 50 versehener Stangenträger dienen kann. Zur Aufnahme des anderen Endes der Führungsstange 48 ist der untere Schenkel 32 der Gelenkstange 28 geteilt ausgebildet und mit zwei parallel zu den seitlichen Schenkeln 34, 36 der Gelenkstange 28 verlaufenden kurzen Schenkeln 54 versehen. Diese weisen zueinander Querabstand auf und nehmen an ihrem freien Ende über Zapfen 52 einen Drehteil 56 auf, in dem die Führungsstange 48 längsverschiebbar geführt ist. Der Drehteil 56 kann damit in den kurzen Schenkeln 54 um die durch die Zapfen 52 gebildete Schwenkachse vertikal schwenken, wobei die von dem Drehteil 56 verschiebbar aufgenommene Führungsstange 48 gegenüber den kurzen Schenkeln 54 der Gelenkstange 28 eine Relativschwenkung ausführen kann. Der Schwenkbereich der Führungsstange 48 geht aus den Fig. 3 und 5 hervor, wobei aus Fig. 5 ersichtlich ist, daß in der dort gezeigten Stellung sich die Führungsstange 48 mit ihrem der Anlenkstelle an den Armen 44 abgelegenen Ende in dem Drehteil 56 befindet, während aus Fig. 3 ersichtlich ist, daß sich in der dort wiedergegebenen Stellung der Führungsstange 48 ihr der Anlenkstelle an die Arme 44 abgelegenes Ende unterhalb des Haubenträgers 26 befindet. Um diese Stellung der Führungsstange 48 zu ermöglichen, ist in dem Haubenträger 26 ein Langloch 55 vorgesehen, durch das das Ende der Führungsstange 48 durchtreten kann. Der mit den Zapfen 50 versehene Stangenträger ist als Anschlag 60 ausgebildet, gegen den das eine Ende einer auf die Führungsstange 48 aufgesteckte Feder 58 anliegt, die sich mit ihrem anderen Ende gegen den Drehteil 56 abstützt. Die Feder 58 kann so ausgebildet sein, daß sie auch in ihrer in Fig. 5 dargestellten Stellung noch gespannt ist. In ihrer in Fig. 3 gezeigten Stellung ist die Feder 58 mehr oder weniger zusammengedrückt.

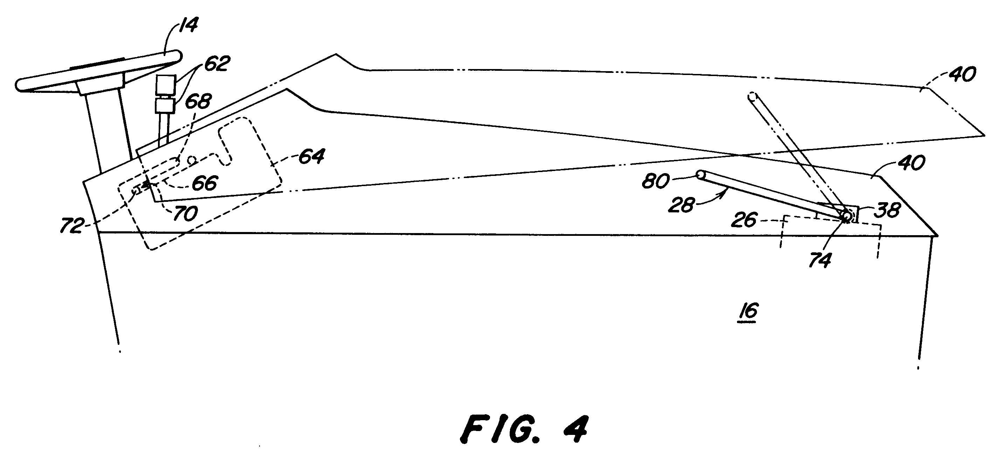

Aus Fig. 4 ist zu entnehmen, daß die Gelenkstange 28 im frontseitigen Bereich der Motorhaube 40 angelenkt ist und daß der rückwärtige und abgewinkelte Bereich der Motorhaube 40 in der geschlossenen Stellung bis unter das Lenkrad 14 und dort vorgesehener Steuerhebel 62 reicht. Hier kann die Motorhaube auch verriegelt werden, wozu in diesem Bereich im Motorraum 16 oder an dem Fahrzeugrahmen zu beiden Seiten der Lenkradsäule eine Platte 64 befestigt ist, die jeweils einen einenends offenen Führungsschlitz aufweist, der, wie aus Fig. 4 zu erkennen ist, nach unten und nach rückwärts geneigt verlaufend angeordnet ist und aus einer Führungsbahn 66 und aus einem darüber liegenden Hakenteil 68 besteht. Die beiden Führungsschlitze sind an ihren frontseitigen Enden 70 offen, so daß dort Zapfen 72 eintreten können, die im rückwärtigen Bereich der Motorhaube 40 vorgesehen sind.

In den Fig. 2, 3 und 5 ist die Schwenkachse des unteren Schenkels 32 der Gelenkstange 28 mit 74 bezeichnet. In der in Fig. 3 gezeigten Schließstellung der Motorhaube 40 liegt das vordere Ende der Führungsstange 48 unterhalb dieser Schwenkachse 74 und unterhalb des unteren Schenkels 32, wobei sich der Drehteil 56 auf der Führungsstange 48 nach hinten verschoben und die Feder 58 derartig gespannt hat, daß der vordere Bereich der Motorhaube 40 nach unten zu einem satten Aufliegen auf die Motorraumbegrenzung gedrückt wird.

Wenn die Motorhaube 40, wie es in der Fig. 5 dargestellt ist, in ihre maximale Offenstellung verschwenkt wurde, dann hat sich die Führungsstange 4 durch den unteren Schenkel 32 der Gelenkstange 28 nach oben bewegt und liegt oberhalb der Schwenkachse 74. Die Feder 58 ist als Druckfeder ausgebildet, in dieser Stellung immer noch gespannt und drückt die Gelenkstange 48 nach vorne. Da die Feder 58 durch einen Hebelarm wirkt, der aus der Schwenkachse 74 und der Verbindung der Führungsstange 48 mit der Gelenkstange 28 gebildet ist, werden die Gelenkstange 28 und die Motorhaube 40 um die Schwenkachse 74 nach vorne gedrückt.

Im Einsatz nimmt die Motorhaube 40 normalerweise ihre in Fig. 3 und in Fig. 4 in ausgezogenen Linien wiedergegebene Schließstellung ein. Um die Motorhaube 40 öffnen zu können, muß sie zunächst entriegelt und in eine Stellung verbracht werden, in der sie von dem Lenkrad 14 freikommt. Hierzu muß eine Bedienungsperson zunächst das vordere Ende der Motorhaube um einige Zentimeter anheben, wie es in Fig. 4 in strichpunktierten Linien angedeutet ist. Bei dieser Höhenbewegung verstellt sich die Führungsstange 48 aus ihrer in Fig. 3 dargestellten Stellung durch den Spalt zwischen den beiden kurzen Schenkeln 54 nach oben und liegt dann oberhalb der Schwenkachse 74. Gleichzeitig verstellt sich die Motorhaube 40 dabei leicht nach vorne. Bei diesem nach vorne Verstellen wird auch die rückwärtige Verriegelung der Motorhaube 40 gelöst, da dann die sich in den Führungsschlitzen befindlichen Stifte 72 auf den Führungsbahnen 66 nach oben und vorne rutschen. Das rückwärtige Ende kommt bei diesem Vorgang von dem Lenkrad 14 und den Steuerhebeln 62 frei. Sobald die Stifte 72 aus ihren Führungsschlitzen ausgetreten sind, kann die Motorhaube 40 weiter nach oben und vorne durch die Bedienungsperson verschwenkt werden, wobei der untere Schenkel 32 der Gelenkstange 28 um die Schwenkachse 74 nach vorne verschwenkt. Sobald sich das freie vordere Ende der Führungsstange 48 oberhalb der Schwenkachse 74 befindet, wird auch die Feder 58 die Schwenkbewegung der Gelenkstange 28 im Uhrzeigerdrehsinn und nach vorne unterstützen, so daß die Bedienungsperson dann keine oder fast keine Muskelkraft zum weiteren Öffnen der Motorhaube aufwenden muß. Nachdem die Motorhaube entriegelt ist, kann sie auch um ihre Anlenkstellen an die Gelenkstange 28 um die Schwenkachse 80 noch einmal mehr im Uhrzeigerdrehsinn verschwenken, bis sie ihre in Fig. 5 dargestellte Stellung einnimmt, in der eine weitere Bewegung der Motorhaube 40 im Uhrzeigerdrehsinn durch den Anschlag 42 begrenzt wird. An dem freien Ende der Führungsstange 48 kann noch ein Mittel vorgesehen werden, das verhindert, daß die Führungsstange 48 in ihrer in Fig. 5 gezeigten Stellung aus ihrem Drehteil 56 austreten kann. Durch diese Maßnahme wird auch der maximale Schwenkbereich der Gelenkstange 28 begrenzt.

Der Anschlag 42 kann in Form eines Quersteges oder eines Schenkels ausgebildet sein, der an einer Lasche 78 angeordnet ist, die sich wiederum im Bereich der Schwenkachse 80 an der Innenseite der Haube befindet. Durch diese Anordnung begrenzt der Anschlag 42 die Schwenkbewegung der Haube im Uhrzeigerdrehsinn um den oberen Schenkel 30 der Gelenkstange 28.

Die vorstehend beschriebene Vorrichtung zum verschwenkbaren Anschließen der Haube, erlaubt einen sehr großen Öffnungswinkel, so daß der Motorraum 16 leicht zugänglich ist.

Zum Schließen der Motorhaube laufen die vorstehend geschilderten Bewegungsabläufe umgekehrt aus. Sobald die Stifte 72 dann wieder auf ihren Führungsbahnen 66 aufliegen, wie es gestrichelt in Fig. 4 dargestellt ist, braucht die Bedienungsperson lediglich auf das vordere Ende der Motorhaube 40 zu drücken, wobei das vordere Ende der Führungsstange 48 wieder unter die Schwenkachse 74 zu liegen kommt. Die Wirkungslinie der Feder 58 liegt dann unterhalb der Schwenkachse 74 und die Feder 58 hält dann das vordere Ende der Haube in ihrer auf dem Motorraum aufliegenden geschlossenen Position, wie es auch in Fig. 3 dargestellt ist.

Die Vorrichtung zum verschwenkbaren Anschließen der Haube hat nur wenige bewegliche Teile und ist in ihrem Aufbau einfach, wobei die Feder 58 nicht nur das Hochschwenken der Motorhaube begünstigt, sondern in der Schließstellung der Haube noch eine Verriegelungsfunktion übernimmt. Auch die Verriegelung am rückwärtigen Ende der Haube ist äußerst einfach ausgebildet und irgendwelche von Hand zu betätigende Verschlußmittel oder Werkzeuge zum Öffnen und Schließen der Haube sind nicht erforderlich. Die wenigen Teile wirken kostenreduzierend in der Herstellung, Montage und Wartung.

**Patentansprüche**

1. Vorrichtung zum Anschließen eines zwischen einer Schließstellung und einer Offenstellung verschwenkbaren Verschlußteiles mit wenigstens einer unter der Wirkung eines Federmittels stehenden Gelenkstange (28), die einenends an dem Verschlußteil über eine erste Schwenkachse (80) und anderenends an einem gestellfesten Teil über eine zweite Schwenkachse (74) angelenkt ist, wobei die Wirkungslinie des Federmittels in der Schließstellung des Verschlußteils an einer Seite der zweiten Schwenkachse (74) und in der Offenstellung des Verschlußteils an der anderen Seite der zweiten Schwenkachse (74) verläuft, gekennzeichnet durch eine einenends gestellfest gelagerte Führungsstange (48), die anderenends mit der Gelenkstange (28) verschiebbar verbunden ist und das als Druckfeder (58) ausgebildete Federmittel aufnimmt.

2. Vorrichtung nach Anspruch 1, dadurch gekennzeichnet, daß die Gelenkstange (28) in der Offenstellung des Verschlußteils gegen einen an dem Verschlußteil vorgesehenen Anschlag (42) zur Anlage bringbar ist.

3. Vorrichtung nach Anspruch 1, wobei die erste Schwenkachse (80) oberhalb der zweiten Schwenkachse (74) angeordnet ist, dadurch gekennzeichnet, daß die Führungsstange (48) um eine dritte gestellfeste Schwenkachse (76) verschwenkbar ist, die in der Schließstellung des Verschlußteils oberhalb der ersten Schwenkachse (80) verläuft.

4. Vorrichtung nach Anspruch 3, dadurch gekennzeichnet, daß die dritte Schwenkachse (76) mit horizontalem Abstand zu der zweiten Schwenkachse (74) angeordnet ist und die Führungsstange (48) mit ihrem der dritten Schwenkachse (76) abgelegenen Ende von einer Seite der zweiten Schwenkachse (74) auf die andere Seite der zweiten Schwenkachse vertikal verschwenkbar ist.

5. Vorrichtung nach einem oder mehreren der vorherigen Ansprüche, dadurch gekennzeichnet, daß die Gelenkstange (28) zwei mit gegenseitigem Abstand angeordnete und an der ersten und zweiten Schwenkachse (80, 74) angreifende Schenkel (34, 36) und wenigstens einen dritten zu dem ersten und zweiten Schenkel (34, 36) parallel verlaufenden Schenkel (54) aufweist, der um die zweite Schwenkachse (74) verschwenkbar ist, eine kürzere Länge als der erste und zweite Schenkel (34, 36) aufweist und an seinem freien Ende die Führungsstange (48) verschiebbar aufnimmt.

6. Vorrichtung nach einem oder mehreren der vorherigen Ansprüche, dadurch gekennzeichnet, daß der Verschlußteil als eine Motorhaube (40) ausgebildet ist, die einen frontseitig an einem Fahrzeug (10) vorgesehenen Motorraum (16) abdeckt, wobei die erste Schwenkachse (80) an einem vorderen Bereich der Motorhaube (40), die zweite Schwenkachse (74) in einem vorderen Bereich des Fahrzeuges (10) und die dritte Schwenkachse (76) mit Längsabstand rückwärtig der zweiten Schwenkachse (74) vorgesehen ist.

7. Vorrichtung nach Anspruch 6, dadurch gekennzeichnet, daß am Fahrzeug ein sich quer erstreckender Haubenträger (26) vorgesehen ist, der zwei etwa mittig angeordnete, zueinander Querabstand aufweisende und nach oben gerichtete Arme (44) aufnimmt, an deren oberen freien Ende die Führungsstange (48) um die dritte Schwenkachse (76) vertikal schwenkbar gelagert ist, auf der ein Drehteil (56) verschiebbar aufsitzt, das seinerseits in den freien Enden von zwei kurzen Schenkeln (54) der Gelenkstange (28) vertikal schwenkbar angeordnet ist, wobei die Feder (58) einenends gegen den Drehteil (56) und anderenends gegen einen Anschlag (60) anliegt, der im Bereich der dritten Schwenkachse (76) vorgesehen ist.

8. Vorrichtung nach einem oder mehreren der vorherigen Ansprüche, dadurch gekennzeichnet, daß mit Abstand zu der Gelenkstange (28) eine Verriegelungsvorrichtung vorgesehen ist, die mindestens eine am Fahrzeug (10) vorgesehene Platte (64) mit einer Führungsbahn aufweist, die einen mit der Motorhaube (40) verbundenen Stift (72) verschiebbar aufnehmen kann.

FIG. 1

FIG. 2

FIG. 3

**FIG. 4**

EP 0 520 343 A1

FIG. 5

Europäisches
Patentamt

EUROPÄISCHER RECHERCHENBERICHT

Nummer der Anmeldung

EP    92 11 0435

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-1 555 123 (DAIMLER-BENZ)<br>* Abbildungen 1-7 *<br><br>--- | 1 | B62D 25/12 |
| A | US-A-2 523 505 (HAUTZENROEDER)<br>* Abbildungen 1-4 *<br><br>----- | 1 | |

RECHERCHIERTE
SACHGEBIETE (Int. Cl.5 )

B62D

Der vorliegende Recherchenbericht wurde für alle Patentansprüche erstellt

| Recherchenort | Abschlußdatum der Recherche | Prüfer |
|---|---|---|
| BERLIN | 18 SEPTEMBER 1992 | LUDWIG H.J. |